# EUROPEAN PATENT APPLICATION

(11) **EP 4 632 108 A1**
(43) Date of publication of application: **15.10.2025**
(21) Application number: 25164695.6
(22) Date of filing: 19.03.2025
(51) Int. Cl.: C25B 1/04, C25B 9/15, C25B 9/19, C25B 13/02, C25B 13/04

(54) **GAS MANAGEMENT SYSTEM FOR AN ELECTROCHEMICAL CELL**

(30) Priority: 12.04.2024 US 202463633256 P
(71) Applicant: Cummins, Inc., Columbus, IN 47202 (US)
(72) Inventor: SADAWARTE, Sandesh, 411021 Bavdhan (IN); OTTIKKUTTI, Pradheepram, Erie 16511 (US); HERREGODS, Sebastiaan, 2650 Edegem (BE); GEERTS, Lisa, 2280 Grobbendonk (BE); THOTA, Renuka, 500032 Hyderabad (IN); BAHULIKAR, Sunil Suryakant, 411038 Kothrud (IN)
(74) Representative: Marks & Clerk Cummins

(57) **Abstract**

A gas management system includes an anodic chamber, a cathodic chamber, and a membrane assembly configured to remove bubbles from an electrochemical cell to increase hydrogen generation of the electrochemical cell. The membrane assembly includes a first outer layer arranged between the cathodic chamber and the anodic chamber, a second outer layer arranged between the first outer layer and the cathodic chamber, and a spacer layer arranged between the first outer layer and the second outer layer.

## Description

### CROSS-REFERENCE TO RELATED APPLICATIONS

This nonprovisional application claims the benefit and priority, under 35 U.S.C. § 119(e) and any other applicable laws or statues, to U.S. Provisional Patent Application Serial No. 63/633,256 filed on April 12, 2024, the entire disclosure of which is hereby expressly incorporated herein by reference.

### TECHNICAL FIELD

The present disclosure relates to a gas management system for a cell and methods of using the gas management system to provide enhanced hydrogen production.

### BACKGROUND

Fuel cell systems are known for their efficient use of fuel to produce direct current electric energy to power mobile applications, such as, for example, vehicles, trains, buses, and trucks. Electrolyzer systems are known for their efficient use of water and electricity to produce hydrogen and oxygen. Typical fuel cells and electrolyzer cells include two chambers formed by multi-component membrane electrode assemblies or diaphragm membranes that enable electrochemical reactions.

As a part of alkaline water electrolysis, hydroxyl ions travel from a cathode to an anode of the cell and gas bubbles cling to an electrode and/or membrane of the membrane electrode assembly and accumulate in an electrolyte and at the electrode-electrolyte interface. The gas bubbles clinging to the electrode may reduce an overall effective active area of the electrode and may lead to mass transfer limitations due to a bubble-induced concentration overpotential. An increase in cell resistance due to activation, ohmic, and concentration overpotential resulting from gas bubbles may result in lower hydrogen generation of the cell at the same potential. Thus, it may be advantageous to efficiently remove the gas bubbles from the membrane electrode assemblies.

The present disclosure is directed to a gas management system for a cell and methods of using the gas management system to enhance hydrogen production of the cell, reduce energy consumption of the cell, and minimize gas crossover between anode and cathode.

### SUMMARY

Embodiments of the present disclosure are included to meet these and other needs.

In one aspect described herein, a gas management system in an electrochemical cell includes an anodic chamber, a cathodic chamber, and a membrane assembly. The anodic chamber is configured to provide a first dry or a first partial dry chamber therein. The cathodic chamber is spaced apart from the anodic chamber in a first direction and is configured to provide a second dry or a second partial dry chamber therein. The membrane assembly is configured to remove gas bubbles from the electrochemical cell to increase hydrogen generation of the electrochemical cell and to reduce gas crossover between the anodic chamber and the cathodic chamber. The membrane assembly includes a first outer layer arranged between the cathodic chamber and the anodic chamber, a second outer layer arranged between the first outer layer and the cathodic chamber, and a spacer layer arranged between the first outer layer and the second outer layer. The first outer layer and the second outer layer cooperate to form a flow chamber therebetween including the spacer layer therein. The spacer layer is porous to allow for flow between the first outer layer and the second outer layer in the first direction. A liquid electrolyte is injected into the flow chamber in a second direction that is perpendicular to the first direction through an inlet of the flow chamber to cause the liquid electrolyte to flow through the flow chamber and through the spacer layer to remove the gas bubbles within the liquid electrolyte and in the membrane assembly from the electrochemical cell.

In some embodiments, the first outer layer may be a diaphragm separator made of zirconium oxide and polyphenylsulfone, and the second outer layer may be a diaphragm separator made of zirconium oxide and polyphenylsulfone. In some embodiments, the spacer layer may be made of polytetrafluoroethylene (PTFE). In some embodiments, the spacer layer may be made of polyether ether ketone (PEEK). In some embodiments, the spacer layer may be made of polyphenylsulfone (PPSU). In some embodiments, the spacer layer may be made of ethylene propylene diene monometer (EPDM). In some embodiments, an outlet may be formed in the flow chamber to remove the liquid electrolyte and the gas bubbles therefrom.

In some embodiments, the electrochemical cell may be an alkaline fuel cell. In some embodiments, the electrochemical cell may be an alkaline electrolyzer cell. In some embodiments, the gas management system may further comprise a recirculation system including a recirculation fluid, at least one inlet nozzle configured to inject the recirculation fluid into the electrochemical cell in the second direction, and at least one outlet nozzle configured to remove the recirculation fluid from the electrochemical cell. In some embodiments, the at least one inlet nozzle may inject the recirculation fluid into the anodic chamber or the cathodic chamber.

In some embodiments, the recirculation fluid may flow through the anodic chamber or the cathodic chamber to remove the gas bubbles from the electrochemical cell. In some embodiments, the recirculation fluid may be hydrogen. In some embodiments, the recirculation fluid may be oxygen. In some embodiments, the recirculation fluid may be water vapor. In some embodiments, the recirculation fluid may be nitrogen. In some embodiments, the gas management system may further comprise a suction pump configured to apply a negative pressure to the membrane assembly to remove the gas bubbles from the electrochemical cell. In some embodiments, the suction pump may be fluidly connected to an outlet of the anodic chamber and an outlet of the cathodic chamber.

In some embodiments, the flow chamber may be formed to include the inlet and an outlet opposite the inlet, the anodic chamber may be formed to include an inlet and an outlet opposite the inlet of the anodic chamber, and the cathodic chamber may be formed to include an inlet and an outlet opposite the inlet of the cathodic chamber. In some embodiments, the liquid electrolyte may be injected into the inlet of the flow chamber and the liquid electrolyte and the gas bubbles may be removed from the flow chamber through the outlet of the flow chamber.

According to a second aspect, described herein, a gas management system for an electrochemical cell includes an anodic chamber, a cathodic chamber, a membrane, and a recirculation system. The anodic chamber is configured to provide a first dry or a first partial dry chamber therein. The cathodic chamber is spaced apart from the anodic chamber in a first direction and is configured to provide a second dry or a second partial dry chamber therein. The membrane is arranged between the cathodic chamber and the anodic chamber. The recirculation system includes a recirculation fluid, at least one inlet nozzle configured to inject the recirculation fluid into the electrochemical cell in a second direction perpendicular to the first direction, and at least one outlet nozzle configured to remove the recirculation fluid from the electrochemical cell. Recirculation fluid is injected into the anodic chamber or the cathodic chamber to flow through the anodic chamber or the cathodic chamber and remove gas bubbles from the electrochemical cell.

In some embodiments, the recirculation fluid may be hydrogen. In some embodiments, the recirculation fluid may be oxygen. In some embodiments, the recirculation fluid may be water vapor. In some embodiments, the recirculation fluid may be nitrogen.

In some embodiments, the membrane may include a first outer layer arranged between the cathodic chamber and the anodic chamber, a second outer layer arranged between the first outer layer and the cathodic chamber, and a spacer layer arranged between the first outer layer and the second outer layer. In some embodiments, the first outer layer and the second outer layer may cooperate to form a flow chamber therebetween and the spacer layer may be porous to allow for flow between the first outer layer and the second outer layer. In some embodiments, the liquid electrolyte may be injected into the flow chamber in the second direction through an inlet formed in the flow chamber to flow through the flow chamber and through the spacer layer to aid in removal of the gas bubbles from the electrochemical cell.

In some embodiments, the first outer layer may be a diaphragm separator made of zirconium oxide and polyphenylsulfone. In some embodiments, the second outer layer may be a diaphragm separator made of zirconium oxide and polyphenylsulfone. In some embodiments, the spacer layer may be made of polytetrafluoroethylene (PTFE). In some embodiments, the spacer layer may be made of polyether ether ketone (PEEK). In some embodiments, the spacer layer may be made of polyphenylsulfone (PPSU). In some embodiments, the spacer layer may be made of ethylene propylene diene monometer (EPDM). In some embodiments, an outlet may be formed in the flow chamber to remove the liquid electrolyte and the gas bubbles therefrom.

In some embodiments, the electrochemical cell may be an alkaline fuel cell. In some embodiments, the electrochemical cell may be an alkaline electrolyzer cell.

According to a third aspect, described herein, a gas management system for an electrochemical cell includes an anodic chamber, a cathodic chamber, a membrane, and a suction pump. The anodic chamber is configured to provide a first dry or a first partial dry chamber therein. The cathodic chamber is spaced apart from the anodic chamber in a first direction and is configured to provide a second dry or a second partial dry chamber therein. The membrane is arranged between the cathodic chamber and the anodic chamber. The suction pump is configured to apply a negative pressure to the anodic chamber or the cathodic chamber to transport gas bubbles from the membrane in a second direction perpendicular to the first direction to remove the gas bubbles from the electrochemical cell.

In some embodiments, the membrane may include a first outer layer arranged between the cathodic chamber and the anodic chamber, a second outer layer arranged between the first outer layer and the cathodic chamber, and a spacer layer arranged between the first outer layer and the second outer layer. In some embodiments, the first outer layer and the second outer layer may cooperate to form a flow chamber therebetween and the spacer layer may be porous to allow for flow between the first outer layer and the second outer layer. In some embodiments, the liquid electrolyte may be injected into the flow chamber in the second direction through an inlet formed in the flow chamber to flow through the flow chamber and through the spacer layer to aid in removal of the gas bubbles from the electrochemical cell.

In some embodiments, the first outer layer may be a diaphragm separator made of zirconium oxide and polyphenylsulfone. In some embodiments, the second outer layer may be a diaphragm separator made of zirconium oxide and polyphenylsulfone. In some embodiments, the spacer layer may be made of polytetrafluoroethylene (PTFE). In some embodiments, the spacer layer may be made of polyether ether ketone (PEEK). In some embodiments, the spacer layer may be made of polyphenylsulfone (PPSU). In some embodiments, the spacer layer may be made of ethylene propylene diene monometer (EPDM). In some embodiments, an outlet may be formed in the flow chamber to remove the liquid electrolyte and the gas bubbles therefrom.

In some embodiments, the electrochemical cell may be an alkaline fuel cell. In some embodiments, the electrochemical cell may be an alkaline electrolyzer cell.

### BRIEF DESCRIPTION OF THE DRAWINGS

FIG. 1A is a schematic view of an exemplary fuel cell system including an air delivery system, a hydrogen delivery system, and a fuel cell module including a stack of multiple fuel cells;
FIG. 1B is a cutaway view of an exemplary fuel cell system including an air delivery system, hydrogen delivery systems, and a plurality of fuel cell modules each including multiple fuel cell stacks;
FIG. 1C is a perspective view of an exemplary repeating unit of a fuel cell stack of the fuel cell system of FIG. 1A;
FIG. 1D is a cross-sectional view of an exemplary repeating unit of the fuel cell stack of FIG. 1C;
FIG. 2A is perspective view of an electrolyzer cell stack according to the present disclosure;
FIG. 2B is a schematic view of an electrolysis system configured to utilize the electrolyzer cell stack of FIG. 2A;
FIG. 2C is a schematic view of an additional portion of the electrolysis system of FIG. 2B;
FIG. 3 is a diagrammatic view of a gas management system included in an electrochemical cell, the gas management system having an anodic chamber, a cathodic chamber, and a membrane assembly arranged therebetween, the membrane assembly having a first outer layer, a second outer layer, and a spacer layer arranged between the first outer layer and the second outer layer;
FIG. 4 is a diagrammatic view of the gas management system of FIG. 3 including a recirculation system configured to inject recirculation fluid into the electrochemical cell to remove gas bubbles adjacent the membrane assembly;
FIG. 5 is a diagrammatic view of the gas management system of FIG. 3 including a suction pump configured to apply negative pressure to the membrane assembly to remove gas bubbles adjacent the membrane assembly;
FIG. 6 is a diagrammatic view of another embodiment of a gas management system included in an electrochemical cell, the gas management system including a recirculation system;
FIG. 7 is a diagrammatic front view of the electrochemical cell of FIG. 6 showing that the recirculation system includes at least one inlet nozzle and at least one outlet nozzle;
FIG. 8 is a diagrammatic view of another embodiment of a gas management system included in an electrochemical cell, the gas management system including a suction pump; and
FIG. 9 is a diagrammatic exploded view of an electrochemical cell used in the gas management systems of FIGS. 6 and 8.

### DETAILED DESCRIPTION

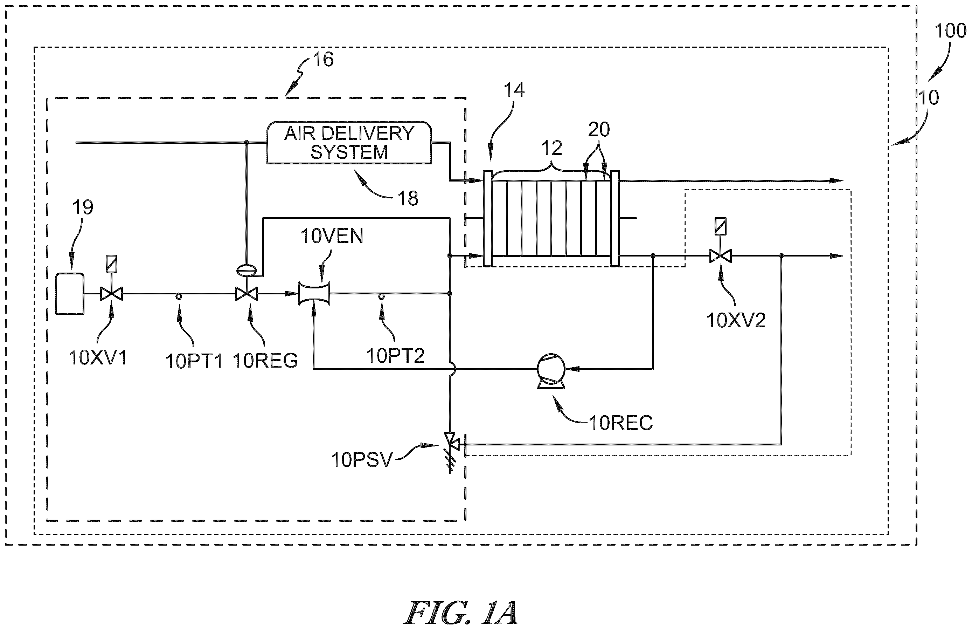

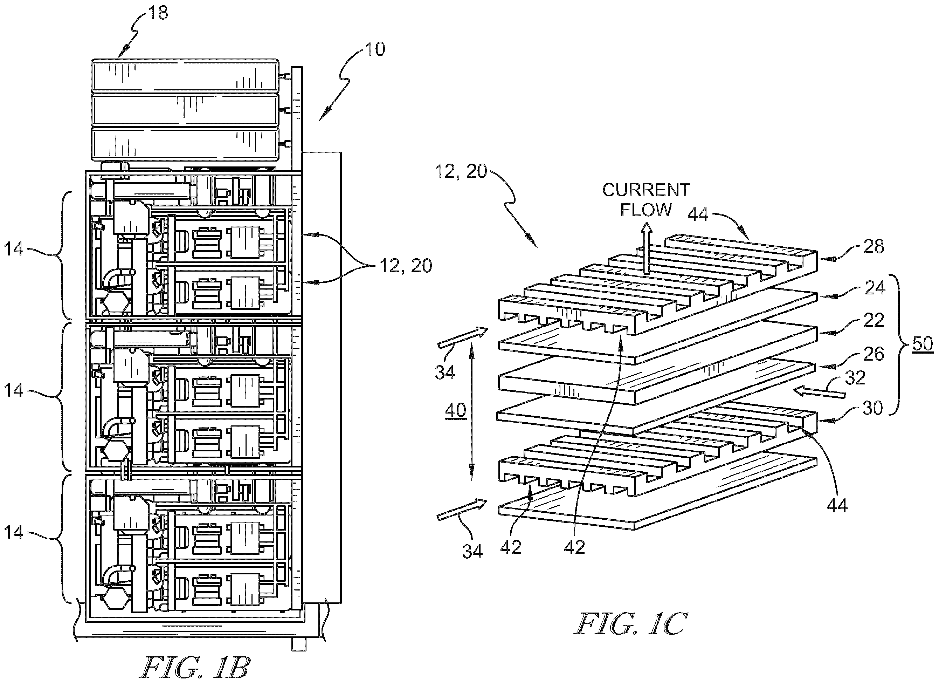

As shown in FIG. 1A, fuel cell systems 10 often include one or more fuel cell stacks 12 or fuel cell modules 14 connected to a balance of plant (BOP) 16, including various components, to support the electrochemical conversion, generation, and/or distribution of electrical power to help meet modern day industrial and commercial needs in an environmentally friendly way. As shown in FIGS. 1B and 1C, fuel cell systems 10 may include fuel cell stacks 12 comprising a plurality of individual fuel cells 20. Each fuel cell stack 12 may house a plurality of fuel cells 20 assembled together in series and/or in parallel. The fuel cell system 10 may include one or more fuel cell modules 14, as shown in FIGS. 1A and 1B. In some embodiments, the fuel cell system 10 may comprise one or more fuel cell stacks 12.

Each fuel cell module 14 may include a plurality of fuel cell stacks 12 and/or a plurality of fuel cells 20. The fuel cell module 14 may also include a suitable combination of associated structural elements, mechanical systems, hardware, firmware, and/or software that is employed to support the function and operation of the fuel cell module 14. Such items include, without limitation, piping, sensors, regulators, current collectors, seals, and insulators.

The fuel cells 20 in the fuel cell stacks 12 may be stacked together to multiply and increase the voltage output of a single fuel cell stack 12. The number of fuel cell stacks 12 in a fuel cell system 10 can vary depending on the amount of power required to operate the fuel cell system 10 and meet the power need of any load. The number of fuel cells 20 in a fuel cell stack 12 can vary depending on the amount of power required to operate the fuel cell system 10 including the fuel cell stacks 12.

The number of fuel cells 20 in each fuel cell stack 12 or fuel cell system 10 can be any number. For example, the number of fuel cells 20 in each fuel cell stack 12 may range from about 100 fuel cells to about 1000 fuel cells, including any specific number or range of number of fuel cells 20 comprised therein (e.g., about 200 to about 800). In an embodiment, the fuel cell system 10 may include about 20 to about 1000 fuel cells stacks 12, including any specific number or range of number of fuel cell stacks 12 comprised therein (e.g., about 200 to about 800). The fuel cells 20 in the fuel cell stacks 12 within the fuel cell module 14 may be oriented in any direction to optimize the operational efficiency and functionality of the fuel cell system 10.

The fuel cells 20 in the fuel cell stacks 12 may be any type of fuel cell 20. The fuel cell 20 may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells 20 may be a polymer electrolyte membrane or proton exchange membrane (PEM) fuel cell or a solid oxide fuel cell (SOFC).

In an embodiment shown in FIG. 1C, the fuel cell stack 12 includes a plurality of proton exchange membrane (PEM) fuel cells 20. Each fuel cell 20 includes a single membrane electrode assembly (MEA) 22 and gas diffusion layers (GDL) 24, 26 on either or both sides of the membrane electrode assembly (MEA) 22 (see FIG. 1C). The fuel cell 20 further includes a bipolar plate (BPP) 28, 30 on the external side of each gas diffusion layers (GDL) 24, 26, as shown in FIG. 1C. The above-mentioned components, in particular the bipolar plate 30, the gas diffusion layer (GDL) 26, the membrane electrode assembly (MEA) 22, and the gas diffusion layer (GDL) 24 comprise a single repeating unit 50.

The bipolar plates (BPP) 28, 30 are responsible for the transport of reactants, such as fuel 32 (e.g., hydrogen) or oxidant 34 (e.g., oxygen, air), and cooling liquid 36 (e.g., coolant and/or water) in a fuel cell 20. The bipolar plates (BPP) 28, 30 can uniformly distribute reactants 32, 34 to an active area 40 of each fuel cell 20 through oxidant flow fields 42 and/or fuel flow fields 44 formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plate (BPP) 28, 30.

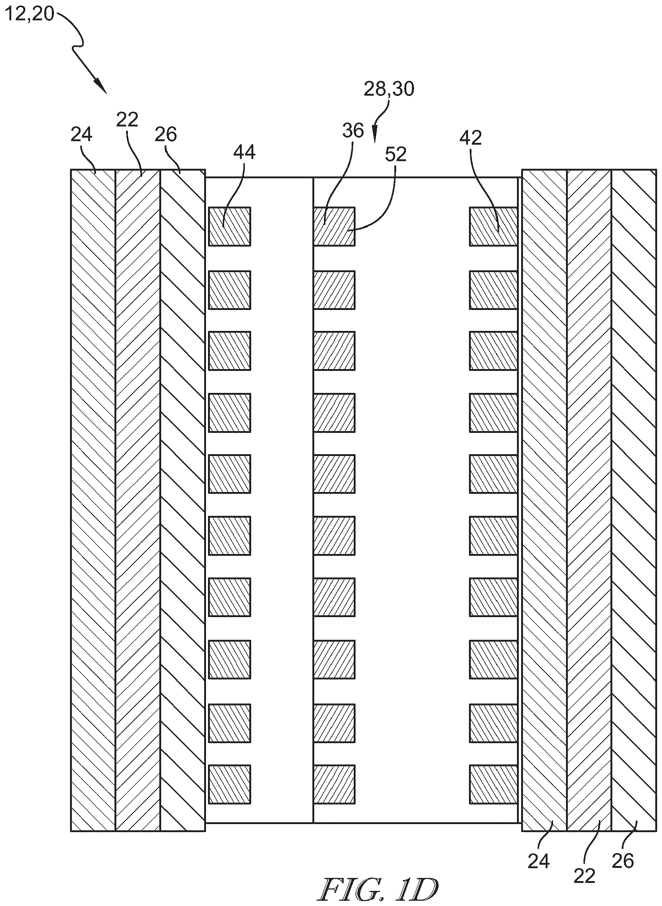

The bipolar plates (BPP) 28, 30 may each be formed to have reactant flow fields 42, 44 formed on opposing outer surfaces of the bipolar plate (BPP) 28, 30, and formed to have coolant flow fields 52 located within the bipolar plate (BPP) 28, 30, as shown in FIG. 1D. For example, the bipolar plate (BPP) 28, 30 can include fuel flow fields 44 for transfer of fuel 32 on one side of the plate 28, 30 for interaction with the gas diffusion layer (GDL) 26. The bipolar plate (BPP) 28, 30 also includes oxidant flow fields 42 for transfer of oxidant 34 on the second, opposite side of the plate 28, 30 for interaction with the gas diffusion layer (GDL) 24.

As shown in FIG. 1D, the bipolar plates (BPP) 28, 30 can further include coolant flow fields 52 formed within the plate (BPP) 28, 30, generally centrally between the opposing outer surfaces of the plate (BPP) 28, 30. The coolant flow fields 52 facilitate the flow of cooling liquid 36 through the bipolar plate (BPP) 28, 30 in order to regulate the temperature of the plate (BPP) 28, 30 materials and the reactants. The bipolar plates (BPP) 28, 30 are compressed against adjacent gas diffusion layers (GDL) 24, 26 to isolate and/or seal one or more reactants 32, 34 within their respective pathways 44, 42 to maintain electrical conductivity, which is required for robust operation of the fuel cell 20 (see FIGS. 1C and 1D).

The fuel cell system 10 described herein may be used in stationary and/or immovable power system, such as industrial applications and power generation plants. The fuel cell system 10 may also be implemented in conjunction with an air delivery system 18. Additionally, the fuel cell system 10 may also be implemented in conjunction with a hydrogen delivery system and/or a source of hydrogen 19 such as a pressurized tank, including a gaseous pressurized tank, cryogenic liquid storage tank, chemical storage, physical storage, stationary storage, an electrolysis system or an electrolyzer. In one embodiment, the fuel cell system 10 is connected and/or attached in series or parallel to a hydrogen delivery system and/or a source of hydrogen 19, such as one or more hydrogen delivery systems and/or sources of hydrogen 19 in the BOP 16 (see FIG. 1A). In another embodiment, the fuel cell system 10 is not connected and/or attached in series or parallel to a hydrogen delivery system and/or a source of hydrogen 19.

In some embodiments, the fuel cell system 10 may include an on/off valve 10XV1, a pressure transducer 10PT1, a mechanical regulator 10REG, and a venturi 10VEN arranged in operable communication with each other and downstream of the hydrogen delivery system and/or source of hydrogen 19, as shown in FIG. 1A. The pressure transducer 10PT1 may be arranged between the on/off valve 10XV1 and the mechanical regulator 10REG. In some embodiments, a proportional control valve may be utilized instead of a mechanical regulator 10REG. In some embodiments, a second pressure transducer 10PT2 is arranged downstream of the venturi 10VEN, which is downstream of the mechanical regulator 10REG.

In some embodiments, the fuel cell system 10 may further include a recirculation pump 10REC downstream of the stack 12 and operably connected to the venturi 1OVEN. The fuel cell system 10 may also include a further on/off valve 10XV2 downstream of the stack 12, and a pressure transfer valve 10PSV, as shown in FIG. 1A.

The present fuel cell system 10 may also be comprised in mobile applications. In an exemplary embodiment, the fuel cell system 10 is in a vehicle and/or a powertrain 100. A vehicle 100 comprising the present fuel cell system 10 may be an automobile, a pass car, a bus, a truck, a train, a locomotive, an aircraft, a light duty vehicle, a medium duty vehicle, or a heavy-duty vehicle. Types of vehicles 100 can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain 100 may be used on roadways, highways, railways, airways, and/or waterways. The vehicle 100 may be used in applications including but not limited to off highway transit, bobtails, and/or mining equipment. For example, an exemplary embodiment of mining equipment vehicle 100 is a mining truck or a mine haul truck.

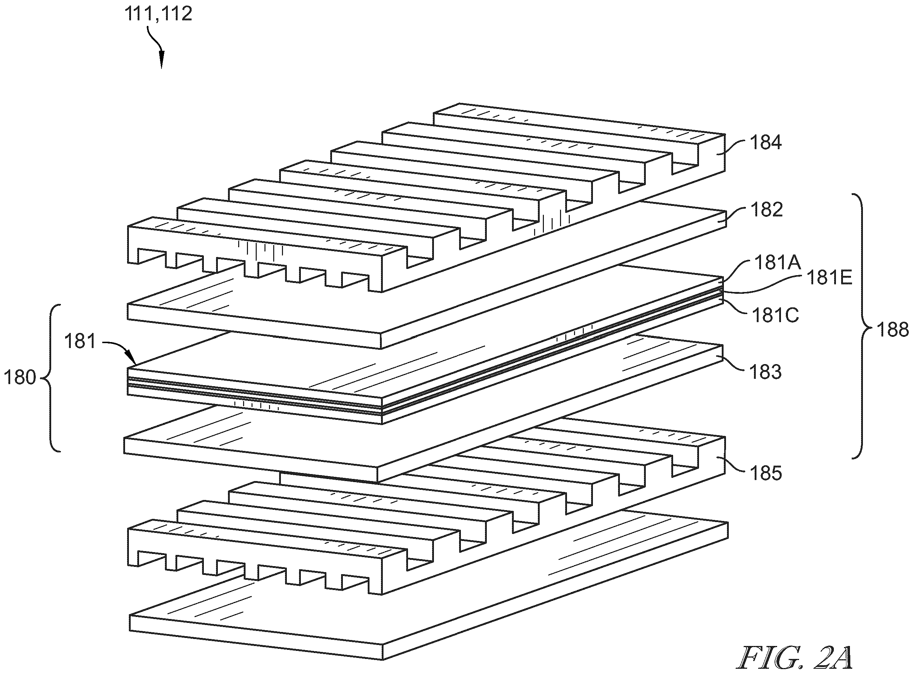

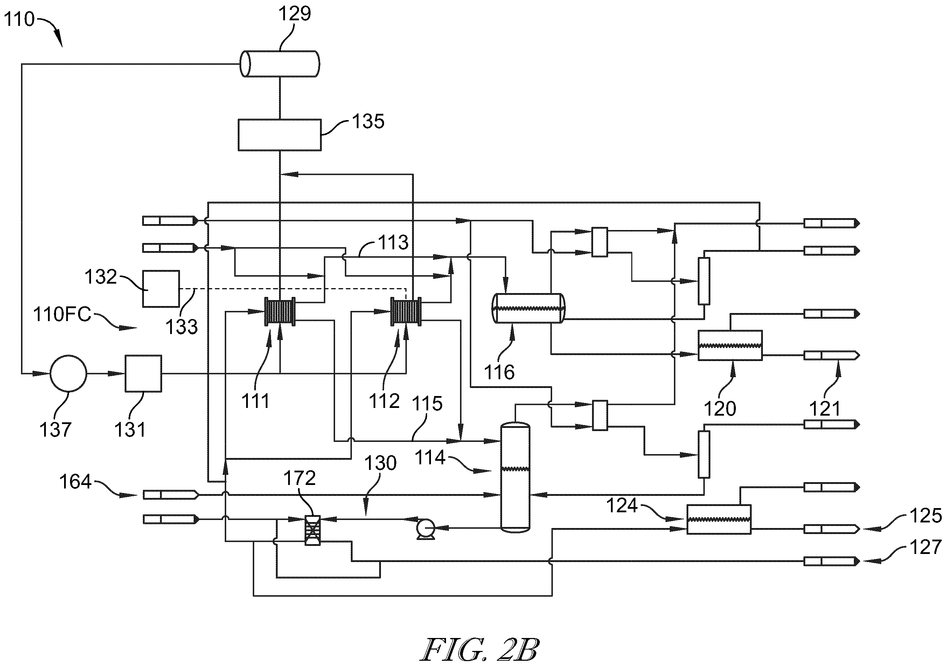

As shown in FIGS. 2A and 2B, electrolysis systems 110 are typically configured to utilize water and electricity to produce hydrogen and oxygen. An electrolysis system 110 typically includes one or more electrolyzer cells 180 that utilize electricity to chemically produce substantially pure hydrogen 113 and oxygen 115 from deionized water 130. Often the electrical source for the electrolysis systems 110 is produced from power or energy generation systems, including renewable energy systems such as wind, solar, hydroelectric, and geothermal sources for the production of green hydrogen. In turn, the pure hydrogen produced by the electrolysis systems 110 is often utilized as a fuel or energy source for those same power generation systems, such as fuel cell systems. Alternatively, the pure hydrogen produced by the electrolysis systems 110 may be stored for later use.

The typical electrolyzer cell 180, or electrolytic cell, is comprised of multiple assemblies compressed and bound into a single assembly, and multiple electrolyzer cells 180 may be stacked relative to each other, along with bipolar plates (BPP) 184, 185 therebetween, to form an electrolyzer cell stack (for example, electrolyzer cell stacks 111, 112 in FIG. 2B). Each electrolyzer cell stack 111, 112 may house a plurality of electrolyzer cells 180 connected together in series and/or in parallel. The number of electrolyzer cell stacks 111, 112 in the electrolysis systems 110 can vary depending on the amount of power required to meet the power need of any load (e.g., fuel cell stack). The number of electrolyzer cells 180 in an electrolyzer cell stack 111, 112 can vary depending on the amount of power required to operate the electrolysis systems 110 including the electrolyzer cell stack 111, 112.

An electrolyzer cell 180 includes a multi-component membrane electrode assembly (MEA) 181 that has an electrolyte 181E, an anode 181A, and a cathode 181C. Typically, the anode 181A, cathode 181C, and electrolyte 181E of the membrane electrode assembly (MEA) 181 are configured in a multi-layer arrangement that enables the electrochemical reaction to produce hydrogen and/or oxygen via contact of the water with one or more gas diffusion layers 182, 183. The gas diffusion layers (GDL) 182, 183, which may also be referred to as porous transport layers (PTL), are typically located on one or both sides of the MEA 181. Bipolar plates (BPP) 184, 185 often reside on either side of the GDLs and separate the individual electrolyzer cells 180 of the electrolyzer cell stack 111, 112 from one another. One bipolar plate 185 and the adjacent gas diffusion layers 182, 183 and MEA 181 can form a repeating unit 188.

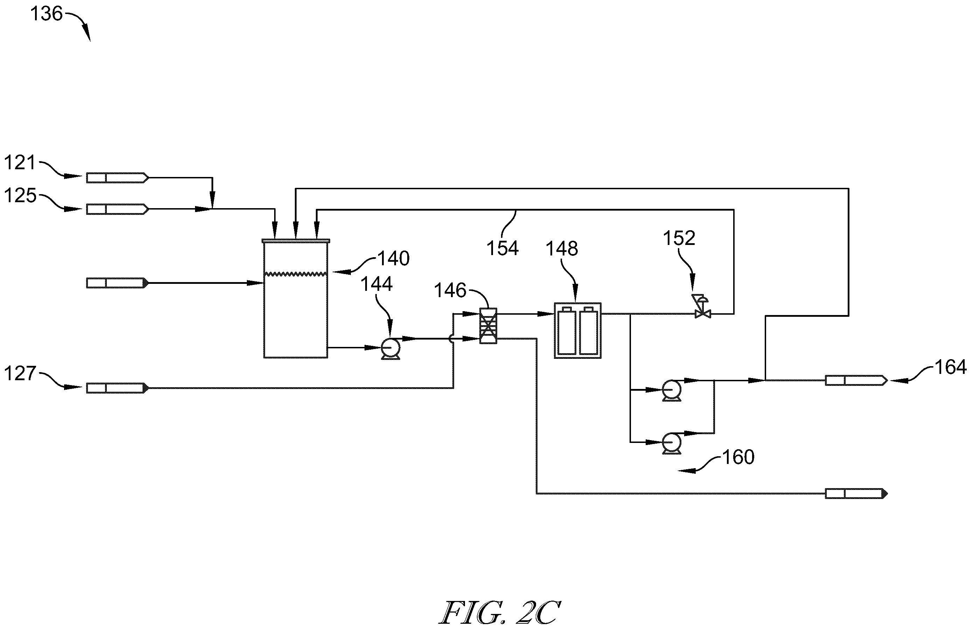

As shown in FIGS. 2B and 2C, an exemplary electrolysis system 110 can include two electrolyzer cell stacks 111, 112 and a fluidic circuit 110FC including the various fluidic pathways shown in FIGS. 2B and 2C that is configured to circulate, inject, and purge fluid and other components to and from the electrolysis systems 110. A person skilled in the art would understand that one or a variety of a number of components within the fluidic circuit 110FC, as well as more or less than two electrolyzer cell stacks 111, 112, may be utilized in the electrolysis systems 110. For example, the electrolysis systems 110 may include one electrolyzer cell stack 111, and in other examples, the electrolysis systems 110 may include three or more electrolyzer cell stacks.

The electrolysis systems 110 may include one or more types of electrolyzer cell stacks 111, 112 therein. In the illustrated embodiment, a polymer electrolyte membrane (PEM) electrolyzer cell 180 may be utilized in the stacks 111, 112. A PEM electrolyzer cell 180 typically operates at about 4°C to about 150°C, including any specific or range of temperatures comprised therein. A PEM electrolyzer cell 180 also typically functions at about 100 bar or less, but can go up to about 1000 bar (including any specific or range of pressures comprised therein), which reduces the total energy demand of the system. A standard electrochemical reaction that occurs in a PEM electrolyzer cell 180 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 180 may be utilized in the electrolysis systems 110. A solid oxide electrolyzer cell 180 will function at about 500°C to about 1000°C, including any specific or range of temperatures comprised therein. A standard electrochemical reaction that occurs in a solid oxide electrolyzer cell 180 to produce hydrogen is as follows.
- Anode: 2O²⁻ → O₂ + 4e⁻
- Cathode: 2H₂O → 4e⁻+ 2H₂ + 2O²⁻
- Overall: 2H₂O (liquid) → 2H₂ + O₂

Moreover, an AEM electrolyzer cell 180 may be utilized, which uses an alkaline media. An exemplary AEM electrolyzer cell 180 is an alkaline electrolyzer cell 180. Alkaline electrolyzer cells 180 comprise aqueous solutions, such as potassium hydroxide (KOH) and/or sodium hydroxide (NaOH), as the electrolyte. Alkaline electrolyzer cells 180 typically perform at operating temperatures ranging from about 0°C to about 150°C, including any specific or range of temperatures comprised therein. Alkaline electrolyzer cell 180 generally operate at pressures ranging from about 1 bar to about 100 bar, including any specific or range of pressures comprised therein. A typical hydrogen-generating electrochemical reaction that occurs in an alkaline electrolyzer cell 180 is as follows.
- Anode: 4OH⁻ → O₂ + 2H₂O + 4e⁻
- Cathode: 4H₂O + 4e⁻ → 2H₂ + 4OH⁻
- Overall: 2 H₂O 2H₂ + O₂

As shown in FIG. 2B, the electrolyzer cell stacks 111, 112 include one or more electrolyzer cells 180 that utilize electricity to chemically produce substantially pure hydrogen and oxygen from water. In turn, the pure hydrogen produced by the electrolyzer may be utilized as a fuel or energy source. As shown in FIG. 2B, the electrolyzer cell stack 111, 112 outputs the produced hydrogen along a fluidic connecting line 113 to a hydrogen separator 116, and also outputs the produced oxygen along a fluidic connecting line 115 to an oxygen separator 114.

The hydrogen separator 116 may be configured to output pure hydrogen gas and also send additional output fluid to a hydrogen drain tank 120, which then outputs fluid to a deionized water drain 121. The oxygen separator 114 may output fluid to an oxygen drain tank 124, which in turn outputs fluid to a deionized water drain 125. A person skilled in the art would understand that certain inputs and outputs of fluid may be pure water or other fluids such as coolant or byproducts of the chemical reactions of the electrolyzer cell stacks 111, 112. For example, oxygen and hydrogen may flow away from the cell stacks 111, 112 to the respective separators 114, 116. The system 110 may further include a rectifier 132 configured to convert electricity 133 flowing to the cell stacks 111, 112 from alternating current (AC) to direct current (DC).

The deionized water drains 121, 125 each output to a deionized water tank 140, which is part of a polishing loop 136 of the fluidic circuit 110FC, as shown in FIG. 2C. Water with ion content can damage electrolyzer cell stacks 111, 112 when the ionized water interacts with internal components of the electrolyzer cell stacks 111, 112. The polishing loop 136, shown in greater detail in FIG. 2C, is configured to deionize the water such that it may be utilized in the cell stacks 111, 112 and not damage the cell stacks 111, 112.

In the illustrated embodiment, the deionized water tank 140 outputs fluid, in particular water, to a deionized water polishing pump 144. The deionized water polishing pump 144 in turn outputs the water to a water polishing heat exchanger 146 for polishing and treatment. The water then flows to a deionized water resin tank 148.

Coolant is directed through the electrolysis systems 110, in particular through a deionized water heat exchanger 172 that is fluidically connected to the oxygen separator 114. The coolant used to cool said water may also be subsequently fed to the water polishing heat exchanger 146 via a coolant input 127 for polishing. The coolant is then output back to the deionized water heat exchanger 172 for cooling the water therein.

After the water is output from the deionized water polishing heat exchanger 146 and subsequently to the deionized water resin tank 148, a portion of the water may be fed to deionized water high pressure feed pumps 160. Another portion of the water may be fed to a deionized water pressure control valve 152, as shown in FIG. 2C. The portion of the water that is fed to the deionized water pressure control valve 152 flows through a recirculation fluidic connection 154 that allows the water to flow back to the deionized water tank 140 for continued polishing.

In some embodiments, the electrolysis systems 110 may increase deionized water skid for polishing water flow to flush out ions within the water at a faster rate. The portion of the water that is fed to the deionized water high pressure feed pumps 160 is then output to a deionized water feed 164, which then flows into the oxygen separator 114 for recirculation and eventual reusage in the electrolyzer cell stacks 111, 112. This process may then continuously repeat.

In some embodiments, the electrolysis system 110 includes an additional gas-liquid separator 129, as shown in FIG. 2B. In some embodiments, the electrolysis system 110 includes an additional heat exchanger 131 downstream of the gas-liquid separator 129. In some embodiments, the electrolysis system 110 includes a third loop for liquid electrolyte that is connected to a flow chamber 232, which will be described in more detail below. The third loop includes at least one membrane contactors 135 for gas removal. In some embodiments, the electrolysis system 110 includes a pump 137 upstream of the heat exchanger 131 and downstream of the gas-liquid separator 129.

The electrolysis systems 110 described herein, may be used in stationary and/or immovable power system, such as industrial applications and power generation plants. The electrolysis systems 110 may also be implemented in conjunction with other electrolysis systems 110.

The present electrolysis systems 110 may be comprised in mobile applications. The electrolysis systems 110 may be in the vehicle or the powertrain 100. The vehicle or powertrain 100 comprising the electrolysis systems 110 may be an automobile, a pass car, a bus, a truck, a train, a locomotive, an aircraft, a light duty vehicle, a medium duty vehicle, or a heavy-duty vehicle.

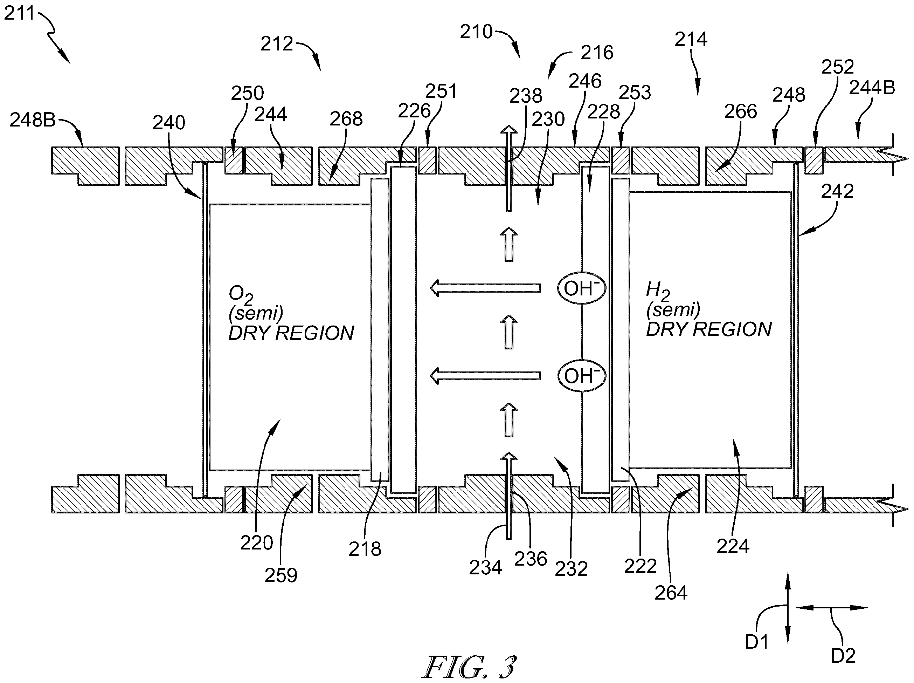

The present disclosure provides a gas management system 210 included in an electrochemical cell 211 formed to include three chambers, as shown in FIG. 3. The gas management system 210 includes an anodic chamber 212, a cathodic chamber 214, and a membrane assembly 216 that defines a flow chamber 232, as shown in FIG. 3. The anodic chamber 212 provides a dry chamber or a semi-dry chamber for oxygen formation, to remove gases and gas bubbles more effectively from the electrochemical cell 211, to enhance oxygen generation of the electrochemical cell 211, and to reduce gas crossover between the anodic chamber 212 and the cathodic chamber 214. In some embodiments, the anodic chamber 212 may include a liquid electrolyte 234 therein. In some embodiments, the anodic chamber 212 comprises an anode 218 and a pre-electrode 220 arranged adjacent the anode 218. The pre-electrode 220 may provide the dry or the semi-dry chamber.

The anode 218 may comprise, for example, nickel-based steel, nickel-based mesh, nickel oxide, cobalt, iron, molybdenum, platinum, or any suitable combination thereof. The anode 218 may comprise a felt-like material configured to keep the anode 218 wetted with the liquid electrolyte 234 to enable the electrochemical oxygen formation. Illustratively, the anodic chamber 212 is porous, and a porosity and a thickness of the anodic chamber 212 may be optimized to enable wetting of the anode 218 by the liquid electrolyte 234. The pre-electrode 220 allows for recirculation of gas therethrough in a first direction D1 and provides electrical contact between the anode 218 and an adjacent bipolar plate 240. The pre-electrode 220 may comprise knitted wire metallic mesh, formed of, for example, nickel. The anodic chamber 212 is formed to include an inlet 259 and an outlet 268, as shown in FIG. 3. Fluid (which may include liquid, gas, and/or vapor) may be injected into the inlet 259, and fluid may exit the outlet 268. The inlet 259 and the outlet 268 may be formed in the oxygen ring 244, which will be described in greater detail below.

The cathodic chamber 214 is spaced apart from the anodic chamber 212 in a second direction D2 that is perpendicular to the first direction D1, as shown in FIG. 3. The cathodic chamber 214 provides a dry chamber or a semi-dry chamber for hydrogen formation, to remove gases and gas bubbles from the electrochemical cell 211 more effectively, to enhance hydrogen generation of the electrochemical cell 211, and to reduce gas crossover between the cathodic chamber 214 and the anodic chamber 212. In some embodiments, the cathodic chamber 214 may include the liquid electrolyte 234 therein. In some embodiments, the cathodic chamber 214 comprises a cathode 222 and a pre-electrode 224 arranged adjacent the cathode 222. The pre-electrode 224 may provide the dry chamber or the semi-dry chamber.

The cathode 222 is arranged between the anode 218 and the pre-electrode 224, as shown in FIG. 3. The cathode 222 may comprise, for example, nickel-based steel, nickel-based mesh, ruthenium oxide, cobalt, iron, molybdenum, platinum, or any suitable combination thereof. The cathode 222 may comprise a felt-like material configured to keep the cathode 222 wetted with the liquid electrolyte 234 to enable the electrochemical hydrogen formation. Illustratively, the cathodic chamber 214 is porous, and a porosity and a thickness may be optimized to enable wetting of the cathode 222 by the liquid electrolyte 234. The pre-electrode 224 allows for recirculation of gas or vapor therethrough in the first direction D1 and provides electrical contact between the cathode 222 and an adjacent bipolar plate 242. The cathodic chamber 214 is formed to include an inlet 264 and an outlet 266, as shown in FIG. 3. Fluid (which may include liquid, gas, and/or vapor) may be injected into the inlet 264, and fluid may exit the outlet 266. The inlet 264 and the outlet 266 may be formed in the hydrogen ring 248, which will be described in greater detail below. Hydroxyl ions (OH⁻) travel from the cathode 222 to the anode 218 in the second direction D2, as shown in FIG. 3. The membrane assembly 216 is configured to remove gas bubbles from the electrochemical cell 211 to increase oxygen and hydrogen generation of the electrochemical cell 211. The gas bubbles may comprise oxygen and/or hydrogen.

During water electrolysis, gases are formed on the anode 218 and the cathode 222. More specifically, H₂ is formed at the cathode 222, and O₂ is formed at the anode 218. The gas bubbles increase an overall electrochemical cell 211 resistance and, therefore, a higher potential is needed for the formation of the same amount of gases (H₂ and O₂), which increases the energy consumption of the electrochemical cell 211.

The increased resistance due to the gas bubbles may be referred to as a bubble overpotential. The gas bubbles reduce the effective active area of the reaction sites on the cathode 222 and the anode 218, increase the ohmic resistance of the electrochemical cell 211, and create mass transfer limitations within the electrochemical cell 211.

Flowing from wet to dry conditions within the electrochemical cell 211 facilitates the gas bubble removal. Thus, the anodic chamber 212 and the cathodic chamber 214 providing dry chambers within the electrochemical cell 211 is advantageous. The membrane assembly 216 allows the anodic chamber 212 and the cathodic chamber 214 to be dry (or semi-dry) as liquid is primarily contained within the membrane assembly 216.

The membrane assembly 216 contains the liquid electrolyte 234 therein as the liquid electrolyte 234 flows through the membrane assembly 216 in the first direction D1, as shown in FIG. 3. The gas bubble removal is more efficient in the dry chambers (the anodic chamber 212 and the cathodic chamber 214) as opposed to traditional wet alkaline electrolysis.

The membrane assembly 216 is configured to minimize gas crossover between the anodic chamber 212 and the cathodic chamber 214. The membrane assembly 216 includes a first outer layer 226, a second outer layer 228, and a spacer layer 230, as shown in FIG. 3. The first outer layer 226 is arranged between the anode 218 and the spacer layer 230 relative to the second direction D2. The second outer layer 228 is arranged between the spacer layer 230 and the cathode 222 relative to the second direction D2. The spacer layer 230 is arranged between the first outer layer 226 and the second outer layer 228.

The first outer layer 226 and the second outer layer 228 cooperate to form the flow chamber 232 therebetween, as shown in FIG. 3. In other words, the membrane assembly 216 defines the flow chamber 232 therein, and the membrane assembly 216 is filled with the liquid electrolyte 234. The spacer layer 230 is porous to allow for flow through the spacer layer 230 and between the outer layers 226, 228 (i.e., in the second direction D2). The liquid electrolyte 234 is injected into the flow chamber 232 through an inlet 236 to flow through the flow chamber 232 and through the spacer layer 230 to remove gas bubbles from within the membrane assembly 216 (i.e., from the liquid electrolyte 234). In some embodiments, the liquid electrolyte 234 comprises potassium hydroxide (KOH) (aq). Though, other liquid electrolytes 234 are contemplated.

The liquid electrolyte 234 flows out of an outlet 238 of the flow chamber 232, as shown in FIG. 3. In some embodiments, the inlet 236 and the outlet 238 may be formed in the spacer ring 246, which will be described in more detail below. The liquid electrolyte 234 may also flow through any of the outer layers 226, 228, the anode 218, the cathode 222, and the pre-electrodes 220, 224. The forced flow of the liquid electrolyte 234 through the flow chamber 232 (from the inlet 236 to the outlet 238) pulls the gas bubbles from within the membrane assembly 216 away from the membrane assembly 216. The removal of the gas bubbles via the forced flow of the liquid electrolyte 234 enhances gas (H₂ and O₂) production of the electrochemical cell 211. The removal of the gas bubbles via the forced flow of the liquid electrolyte 234 also reduces gas crossover within the electrochemical cell 211 between the anodic chamber 212 and the cathodic chamber 214.

If an electrochemical cell, such as the electrochemical cell 211, is increased in size, then a surface area of the membrane assembly 216 increases. When the surface area of the membrane assembly 216 increases, it may become challenging to manage the gas bubbles that are being formed as part of the electrolysis reaction because the gas bubbles are present in the membrane assembly 216 and on surfaces of the anode 218 and the cathode 222.

The gas management system 210 helps to remove the gas bubbles from the electrochemical cell 211 that are present in the membrane assembly 216 and on surfaces of the anode 218 and the cathode 222. The removal of the gas bubbles improves the current density of the membrane assembly 216, which improves a conversion efficiency of stacks including the electrochemical cell 211. The removal of the gas bubbles also improves the reliability of the membrane assembly 216 because the gas bubbles that are within the membrane assembly 216 and on surfaces of the anode 218 and the cathode 222 create hot spots on the membrane assembly 216, the anode 218, and/or the cathode 222, thereby making that area of the membrane assembly 216, the anode 218, and/or the cathode 222 ineffective for participation in the electrolysis reaction.

Further, removal of the gas bubbles from the membrane assembly 216, the anode 218, and/or the cathode 222 improves the reliability of the membrane assembly 216, the anode 218, and/or the cathode 222 as the membrane assembly 216, the anode 218, and/or the cathode 222 experience less degradation. Moreover, removal of gas bubbles from the membrane assembly 216 decreases gas crossover between the anodic chamber 212 and cathodic chamber 214, which improves the operation range in which the electrochemical cell 211 can be operated safely.

In some embodiments, the first outer layer 226 and the second outer layer 228 are each formed of a diaphragm separator. The first outer layer 226 and the second outer layer 228 may be made by phase inversion comprising an organic polymer, such as, but not limited to, polyphenylsulfone, polysulfone, or polyethersulfone and inorganic oxide particles, for example, but not limited to, zirconium, bismuth, titanium, cerium, magnesium, magnesium oxide, or hydroxide. The first outer layer 226 and the second outer layer 228 may have a porous support and one or more selective skin layers. In some embodiments, the first outer layer 226 and the second outer layer 228 may be formed of a woven fabric of polyphenylsulfone.

In some embodiments, a thickness of each of the first outer layer 226 and the second outer layer 228 (as measured in the second direction D2) is about 120 µm to about 140 µm, including any range or specific thickness comprised therein. In some embodiments, a thickness of each of the first outer layer 226 and the second outer layer 228 (as measured in the second direction D2) is about 130 µm. In some embodiments, a thickness of each of the first outer layer 226 and the second outer layer 228 (as measured in the second direction D2) is less than about 130 µm. Thinner outer layers 226, 228 enable a gap between the anode 218 and the cathode 222 to be minimized, which helps to increase efficiency of the electrochemical cell 211.

In some embodiments, a thickness of the flow chamber 232 (i.e., the spacer layer 230) formed between the outer layers 226, 228 is about 230 µm to about 250 µm, including any range or specific thickness comprised therein. In some embodiments, a thickness of the flow chamber 232 (i.e., the spacer layer 230) formed between the outer layers 226, 228 is about 240 µm. The spacer layer 230 is configured to keep the first outer layer 226 and the second outer layer 228 separated from one another so that the liquid electrolyte 234 can flow through the flow chamber 232 in the first direction D1.

In some embodiments, the spacer layer 230 comprises woven or knitted polymeric mesh. In some embodiments, the spacer layer 230 is formed of polytetrafluoroethylene (PTFE). In some embodiments, the spacer layer 230 is formed of polyether ether ketone (PEEK). In some embodiments, the spacer layer 230 is formed of polyphenylsulfone (PPSU). In some embodiments, the spacer layer 230 is formed of ethylene propylene diene monometer (EPDM). In some embodiments, the spacer layer 230 is formed of, for example, polypropylene, fluirne resin, polyethylene, polyparaphenylen benzobisoxazole, polyketone, polyimide, or polyetherimide.

Because the spacer layer 230 is porous, and in some embodiments comprises a woven or nonwoven polymeric mesh or fabric, the liquid electrolyte 234 flows through the spacer layer 230 in both directions D1, D2. For example, the liquid electrolyte 234 flows through the first outer layer 226, the spacer layer 230, and the second outer layer 228. The liquid electrolyte 234 may flow through the first outer layer 226 into the anodic chamber 212 and/or through the second outer layer 228 into the cathodic chamber 214 to wet the anode 218 and the cathode 222, respectively. The spacer layer 230 ensures that, after compression of the electrochemical cell 211, the flow chamber 232 is formed. Without the spacer layer 230, the outer layers 226, 228 may push against one another such that no flow chamber 232 is formed therebetween.

The electrochemical cell 211 may be a fuel cell, such as the fuel cell 20 described above, or an electrolyzer cell, such as the electrolyzer cell 180 as described above. The electrochemical cell 211 may be an alkaline fuel cell, such as the fuel cell 20 described above, or an alkaline electrolyzer cell, such as the electrolyzer cell 180 as described above.

The electrochemical cell 211 includes a first bipolar plate 240 arranged adjacent the pre-electrode 220 relative to the second direction D2 to locate the pre-electrode 220 between the first bipolar plate 240 and the anode 218, as shown in FIG. 3. The electrochemical cell 211 includes a second bipolar plate 242 arranged adjacent the pre-electrode 224 relative to the second direction D2 to locate the pre-electrode 224 between the second bipolar plate 242 and the cathode 222, as shown in FIG. 3.

The electrochemical cell 211 further includes an oxygen ring 244, a spacer ring 246, and/or a hydrogen ring 248, as shown in FIG. 3. The oxygen ring 244 extends around the pre-electrode 220, the anode 218, and first outer layer 226. The hydrogen ring 248 extends around the cathode 222, the pre-electrode 224, and the second bipolar plate 242. The spacer ring 246 is arranged between the oxygen ring 244 and the hydrogen ring 248 relative to the second direction D2. The spacer ring 246 extends around the spacer layer 230 and the second outer layer 228 of the membrane assembly 216. The spacer ring 246 provides additional space in the electrochemical cell 211 so that the layers 228, 230 can be included in the membrane assembly 216.

The electrochemical cell 211 further includes gaskets between each ring 244, 246, 248, such as a first gasket 250, a second gasket 252, a third gasket 251, and a fourth gasket 253, as shown in FIG. 3. The first gasket 250 is arranged between an end of the oxygen ring 244 and an end of an adjacent hydrogen ring 248B for sealing therebetween. The third gasket 251 is arranged between an end of the oxygen ring 244 and an end of spacer ring 246 for sealing therebetween. The fourth gasket 253 is arranged between an end of the spacer ring 246 and an end of hydrogen ring 248 for sealing therebetween.

As shown in FIG. 3, an oxygen ring 244B of an additional cell is arranged adjacent the hydrogen ring 248. The second gasket 252 is arranged between an end of the oxygen ring 244B and an end of the hydrogen ring 248 for sealing therebetween. As shown in FIG. 2B, the liquid electrolyte 234 may flow through the flow chamber 232 and into the membrane contactor 135. The liquid electrolyte 234 may then flow through the gas-liquid separator 129. The membrane contactor 135 and the gas-liquid separator 129 may cooperate to separate the gas bubbles and the liquid electrolyte 234. The separated liquid electrolyte 234 may be pumped from the gas-liquid separator 129 via the pump 137 through the heat exchanger 131 and back into the flow chamber 232 for recirculation.

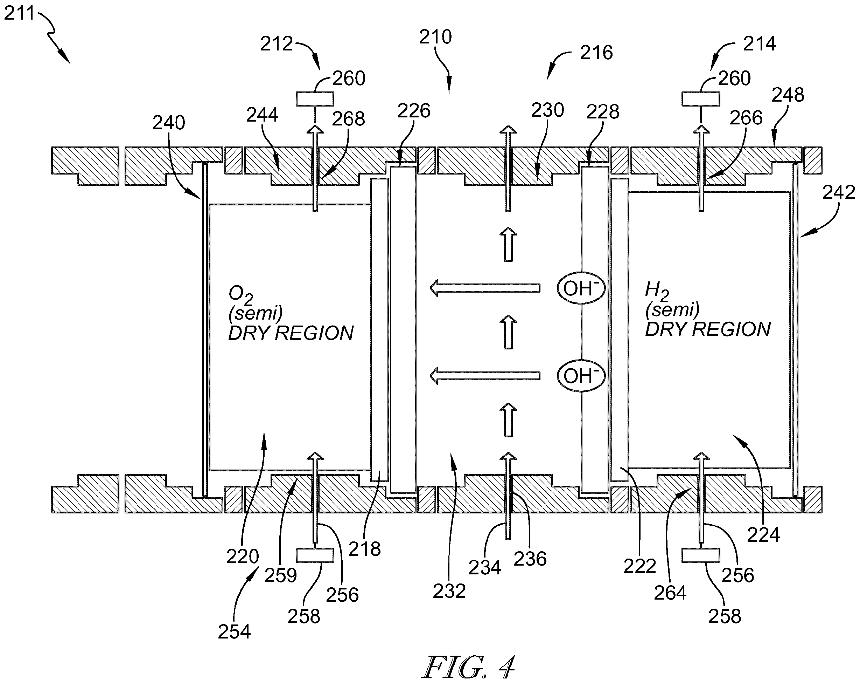

In some embodiments, the gas management system 210 includes a recirculation system 254, as shown in FIG. 4. The recirculation system 254 includes a recirculation fluid 256, at least one inlet nozzle 258, and at least one outlet nozzle 260. The recirculation fluid 256 helps to carry the gas bubbles away from the membrane assembly 216, the anode 218, and/or the cathode 222. The at least one inlet nozzle 258 is configured to inject the recirculation fluid 256 into the electrochemical cell 211. The at least one outlet nozzle 260 is configured to remove the recirculation fluid 256 from the electrochemical cell 211. The type and operational conditions (flow rate, static, dynamic, etc.) of the recirculation fluid 256 and the liquid electrolyte 234 may be optimized to enhance the gas bubble removal.

In some embodiments, the recirculation fluid 256 is hydrogen. In some embodiments, the recirculation fluid 256 is oxygen. In some embodiments, the recirculation fluid 256 is water vapor. In some embodiments, the recirculation fluid 256 is nitrogen. In some embodiments, the recirculation fluid 256 is an inert gas.

The recirculation fluid 256 is injected into and circulated through the pre-electrodes 220, 224, as shown in FIG. 4. The design of the pre-electrodes 220, 224 (such as mesh size, wire size, pattern, pattern orientation, material, microstructure, morphology) can be optimized for enabling the gas bubble removal to enhance the flow of the recirculation fluid 256 within the electrochemical cell 211 and/or increase a contact area between liquid and gas/vapor phase and to optimize pressure drop over the electrochemical cell 211.

In some embodiments, the recirculation fluid 256 circulates through the spacing between the cathode 222 and the bipolar plate 242, inside of and through the pre-electrode 224, through the spacing between the anode 218 and the bipolar plate 240, and/or inside of and through the pre-electrode 220.

In some embodiments, the at least one inlet nozzle 258 injects the recirculation fluid 256 into the anodic chamber 212 and/or the cathodic chamber 214, as shown in FIG. 4. The felt-like material of the anode 218 and the cathode 222 may facilitate gas circulation within the electrochemical cell 211. In some embodiments, the at least one inlet nozzle 258 and the at least one outlet nozzle 260 cooperate to form a closed loop for the recirculation fluid 256. In some embodiments, the at least one inlet nozzle 258 and the at least one outlet nozzle 260 form an open loop such that the recirculation fluid 256 is not recirculated through the electrochemical cell 211 multiple times. In some embodiments, the nozzles 258, 260 are integrated with the oxygen and hydrogen rings, 244, 248. The recirculation fluid 256, the formed oxygen and hydrogen in the anodic chamber 212 and the cathodic chamber 214, respectively, and any present water vapor may exit the electrochemical cell 211 from the at least one outlet nozzle 260.

As shown in FIG. 4, the at least one inlet nozzle 258 may be fluidly connected to the inlet 259 of the anodic chamber 212 and/or the inlet 264 of the cathodic chamber 214. The at least one outlet nozzle 260 may be fluidly connected to the outlet 268 of the anodic chamber 212 and/or the outlet 266 of the cathodic chamber 214.

The recirculation fluid 256 makes the gas bubble detachment mass transfer from the liquid to the gas/vapor environment more favorable (i.e., enhances the flux from the liquid to the gas/vapor environment). A temperature, a pressure, and/or a velocity of the recirculation fluid 256 may be controlled to enhance the transfer from the liquid (i.e., the flow chamber 232) to the gas/vapor environment (i.e., the anodic chamber 212 and/or the cathodic chamber 214). The recirculation fluid 256 enhances gas bubble removal from the anode 218 and the cathode 222, and thus, the electrochemical cell 211, thereby enabling higher performance of the electrochemical cell 211. Lastly, the recirculation fluid 256 helps to remove heat from the electrochemical cell 211 as the gas bubbles adjacent the anode 218, the cathode 222, and located inside of the membrane assembly 216 generate heat.

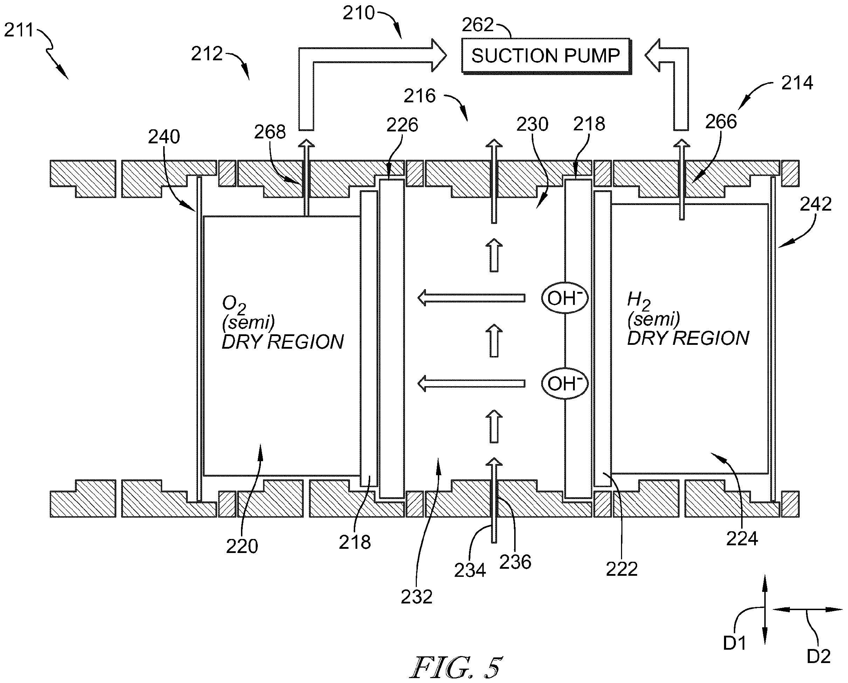

In some embodiments, the gas management system 210 includes a suction pump 262, as shown in FIG. 5. The suction pump 262 applies a negative pressure to the anodic chamber 212 and/or the cathodic chamber 214 to remove gas bubbles adjacent the anode 218, the cathode 222, and/or within the membrane assembly 216. The suction pump 262 is connected to the outlet 268 of the anodic chamber 212 and/or the outlet 266 of the cathodic chamber 214. The suction pump 262 is connected to the anodic chamber 212 through the oxygen ring 244 and to the cathodic chamber 214 through the hydrogen ring 248. The negative pressure transports the gas bubbles away from the membrane assembly 216, the anode 218, and/or the cathode 222. In some embodiments, the suction pump 262 may move the gas bubbles toward a gas/liquid separator downstream of the electrochemical cell 211. In some embodiments, the suction pump 262 may be a vacuum pump 262 or any other device that can generate negative pressure.

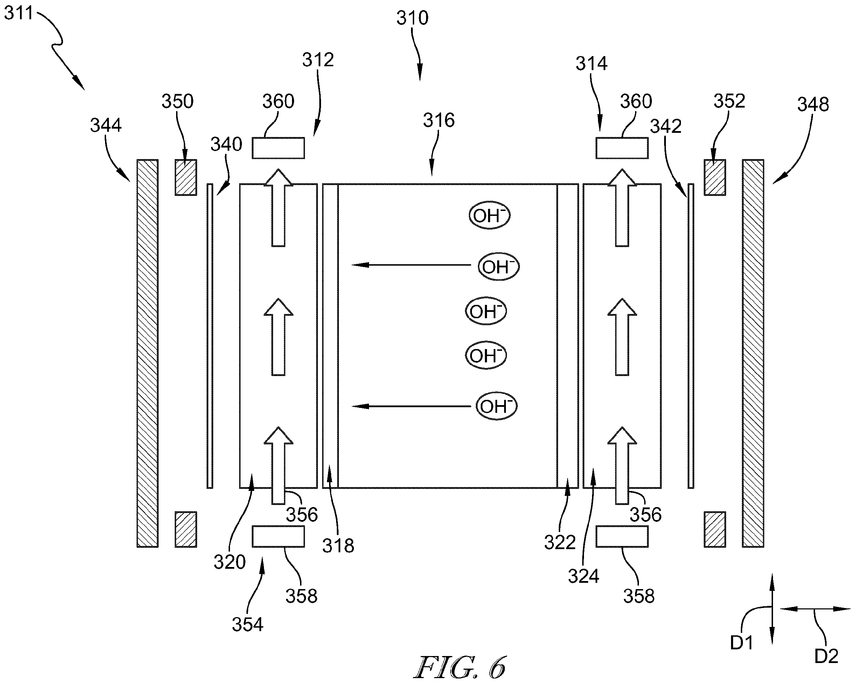

The present disclosure provides an alternative gas management system 310. FIG. 6 illustrates another embodiment of a gas management system 310 that is substantially similar to the gas management system 210. However, the gas management system 310 includes a different membrane structure. In the absence of disclosure to the contrary, the features and components of the gas management system 210 are applicable and present for the gas management system 310.

The gas management system 310 is included in an electrochemical cell 311 that is formed to include two chambers. The gas management system 310 includes an anodic chamber 312, a cathodic chamber 314, and a membrane assembly 316, as shown in FIG. 6. The anodic chamber 312 provides a dry chamber or a semi-dry chamber for oxygen formation. In some embodiments, the anodic chamber 212 may include liquid electrolyte therein. In some embodiments, the anodic chamber 312 comprises an anode 318 and a pre-electrode 320 arranged .adjacent the anode 318. The pre-electrode 320 may provide the dry chamber or the semi-dry chamber.

The anode 318 may comprise, for example, nickel-based steel, nickel-based mesh, nickel oxide, cobalt, iron, molybdenum, platinum, or any suitable combination thereof. The anode 318 may comprise a felt-like material configured to keep the anode 318 wetted with the liquid electrolyte to enable the electrochemical oxygen formation. Illustratively, the anodic chamber 312 is porous, and a porosity and a thickness of the anodic chamber 312 may be optimized to enable wetting of the anode 318 by the liquid electrolyte. The pre-electrode 320 allows for recirculation of gas therethrough in a first direction D1 and provides electrical contact between the anode 318 and an adjacent bipolar plate 340.

The cathodic chamber 314 is spaced apart from the anodic chamber 312 in a second direction D2 that is perpendicular to the first direction D1, as shown in FIG. 6. The cathodic chamber 314 provides a dry chamber or a semi-dry chamber for hydrogen formation. In some embodiments, the cathodic chamber 314 may include the liquid electrolyte therein. In some embodiments, the cathodic chamber 314 comprises a cathode 322 and a pre-electrode 324 arranged adjacent the cathode 322. The pre-electrode 324 may provide the dry chamber or the semi-dry chamber.

The cathode 322 is arranged between the anode 318 and the pre-electrode 324, as shown in FIG. 6. The cathode 322 may comprise, for example, nickel-based steel, nickel-based mesh, ruthenium oxide, cobalt, iron, molybdenum, platinum, or any suitable combination thereof. The cathode 322 may comprise a felt-like material configured to keep the cathode 322 wetted with the liquid electrolyte to enable the electrochemical hydrogen formation. Illustratively, the cathodic chamber 314 is porous, and a porosity and a thickness may be optimized to enable wetting of the cathode 322 by the liquid electrolyte. The pre-electrode 324 allows for recirculation of gas or vapor therethrough in the first direction D1 and provides electrical contact between the cathode 322 and an adjacent bipolar plate 342. Hydroxyl ions (OH⁻ ) travel from the cathode 322 to the anode 218 in the second direction D2, as shown in FIG. 6.

The membrane assembly 316 is arranged between the anode 318 and the cathode 322, as shown in FIG. 6. The membrane assembly 316 may also be referred to as a membrane 316 or a diaphragm 316. The membrane 316 is porous to allow for flow through the membrane 316 (i.e., in the second direction D2). In some embodiments, the membrane 316 may comprise porous zirconium oxide.

The electrochemical cell 311 includes a first bipolar plate 340 arranged adjacent the pre-electrode 320 relative to the second direction D2 to locate the pre-electrode 320 between the first bipolar plate 340 and the anode 318, as shown in FIG. 6. The electrochemical cell 311 includes a second bipolar plate 342 arranged adjacent the pre-electrode 324 relative to the second direction D2 to locate the pre-electrode 324 between the second bipolar plate 342 and the cathode 322, as shown in FIG. 6.

The electrochemical cell 311 further includes an oxygen ring 344 and/or a hydrogen ring 348, as shown in FIG. 6. The oxygen ring 344 extends around the pre-electrode 320 and the anode 318. The hydrogen ring 348 extends around the cathode 322, the pre-electrode 324, and the second bipolar plate 242. The electrochemical cell 311 further includes a first gasket 350 and a second gasket 352.

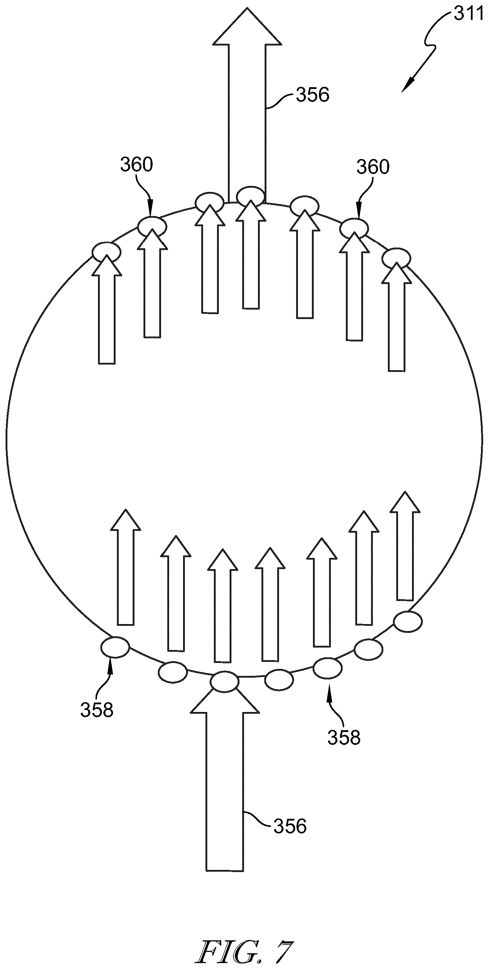

The gas management system 310 includes a recirculation system 354, as shown in FIG. 6. The recirculation system 354 includes a recirculation fluid 356, at least one inlet nozzle 358, and at least one outlet nozzle 360. Illustratively, the recirculation system 354 may include a plurality of inlet nozzles 358 and a plurality of outlet nozzles 360, as shown in FIG. 7. The recirculation fluid 356 carries gas bubbles away from the membrane 316, the anode 318, and/or the cathode 322. The at least one inlet nozzle 358 is configured to inject the recirculation fluid 356 into the electrochemical cell 311, as shown in FIG, 7. The at least one outlet nozzle 360 is configured to remove the recirculation fluid 356 from the electrochemical cell 311, as shown in FIG. 7. The type and operational conditions (flow rate, static, dynamic, etc.) of the recirculation fluid 356 and the liquid electrolyte may be optimized to enhance the gas bubble removal.

In some embodiments, the recirculation fluid 356 is hydrogen. In some embodiments, the recirculation fluid 356 is oxygen. In some embodiments, the recirculation fluid 356 is water vapor. In some embodiments, the recirculation fluid 356 is nitrogen. In some embodiments, the recirculation fluid 356 is an inert gas.

The recirculation fluid 356 is injected into and circulated through the spacing between the cathode 322 and the bipolar plate 342, inside of and through the pre-electrode 324, through the spacing between the anode 318 and the bipolar plate 340, and/or inside of and through the pre-electrode 320, as shown in FIG. 6. In some embodiments, the recirculation fluid 356 circulates through the spacing between the cathode 222 and the second bipolar plate 342 (i.e., through the pre-electrode 324) and/or through the spacing between the anode 318 and the membrane 316.

In some embodiments, the at least one inlet nozzle 358 injects the recirculation fluid 356 into the anodic chamber 312 and/or the cathodic chamber 314, as shown in FIG. 6. The felt-like material of the anode 318 and the cathode 322 may facilitate gas circulation within the electrochemical cell 311. In some embodiments, the at least one inlet nozzle 358 and the at least one outlet nozzle 360 cooperate to form a closed loop for the recirculation fluid 356. In some embodiments, the at least one inlet nozzle 358 and the at least one outlet nozzle 360 form an open loop such that the recirculation fluid 356 is not recirculated through the electrochemical cell 311 multiple times. In some embodiments, the nozzles 358, 360 are integrated with the oxygen and hydrogen rings, 344, 348. The recirculation fluid 356 and the formed oxygen and hydrogen in the anodic chamber 312 and the cathodic chamber 314, respectively, may exit the electrochemical cell 311 from the at least one outlet nozzle 360.

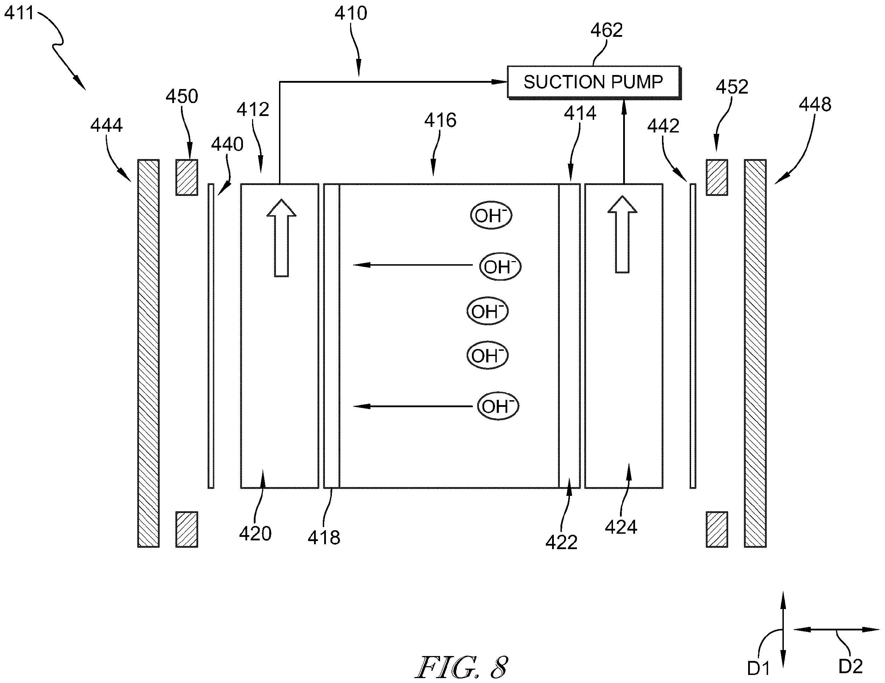

The present disclosure provides an alternative gas management system 410. FIG. 8 illustrates another embodiment of a gas management system 410 that is substantially similar to the gas management system 210 and the gas management system 310. However, the gas management system 410 includes a different membrane structure. In the absence of disclosure to the contrary, the features and components of the gas management system 210 and the gas management system 310 are applicable and present for the gas management system 410.

The gas management system 410 is included in an electrochemical cell 411 that is formed to include two chambers. The gas management system 410 includes an anodic chamber 412, a cathodic chamber 414, and a membrane assembly 416, as shown in FIG. 8. The anodic chamber 412 provides a dry chamber or a semi-dry chamber for oxygen formation. In some embodiments, the anodic chamber 412 may include liquid electrolyte therein. In some embodiments, the anodic chamber 412 comprises an anode 418 and a pre-electrode 420 arranged adjacent the anode 418. The pre-electrode 420 may provide the dry chamber or the semi-dry chamber. The anode 418 may comprise, for example, nickel-based steel, nickel-based mesh, nickel oxide, cobalt, iron, molybdenum, platinum, or any suitable combination thereof. The anode 418 may comprise a felt-like material configured to keep the anode 418 wetted with the liquid electrolyte to enable the electrochemical oxygen formation. Illustratively, the anodic chamber 412 is porous, and a porosity and a thickness of the anodic chamber 412 may be optimized to enable wetting of the anode 418 by the liquid electrolyte.

The cathodic chamber 414 is spaced apart from the anodic chamber 412 in a second direction D2 that is perpendicular to the first direction D1, as shown in FIG. 8. The cathodic chamber 414 provides a dry chamber or a semi-dry chamber for hydrogen formation. In some embodiments, the cathodic chamber 414 may include the liquid electrolyte therein. In some embodiments, the cathodic chamber 414 comprises a cathode 422 and a pre-electrode 424 arranged adjacent the cathode 422. The pre-electrode 424 may provide the dry chamber or the semi-dry chamber.

The cathode 422 is arranged between the anode 418 and the pre-electrode 424, as shown in FIG. 8. The cathode 422 may comprise, for example, nickel-based steel, nickel-based mesh, ruthenium oxide, cobalt, iron, molybdenum, platinum, or any suitable combination thereof. The cathode 422 may comprise a felt-like material configured to keep the cathode 422 wetted with the liquid electrolyte to enable the electrochemical hydrogen formation. Illustratively, the cathodic chamber 414 is porous, and a porosity and a thickness may be optimized to enable wetting of the cathode 422 by the liquid electrolyte. Hydroxyl ions (OH⁻) travel from the cathode 422 to the anode 418 in the second direction D2, as shown in FIG. 8.

The membrane assembly 416 is arranged between the anode 418 and the cathode 422, as shown in FIG. 8. The membrane assembly 416 may also be referred to as a membrane 416 or a diaphragm 416. The membrane 416 is porous to allow for flow through the membrane 416 (i.e., in the second direction D2). In some embodiments, the membrane 416 may comprise porous zirconium oxide.

The electrochemical cell 411 includes a first bipolar plate 440 arranged adjacent the pre-electrode 420 relative to the second direction D2 to locate the pre-electrode 420 between the first bipolar plate 440 and the anode 418, as shown in FIG. 8. The electrochemical cell 411 includes a second bipolar plate 442 arranged adjacent the pre-electrode 424 relative to the second direction D2 to locate the pre-electrode 424 between the second bipolar plate 442 and the cathode 422, as shown in FIG. 8.

The electrochemical cell 411 further includes an oxygen ring 444 and/or a hydrogen ring 448, as shown in FIG. 8. The oxygen ring 444 extends around the pre-electrode 420 and the anode 418. The hydrogen ring 448 extends around the cathode 422, the pre-electrode 424, and the second bipolar plate 442. The electrochemical cell 411 further includes a first gasket 450 and a second gasket 452.

The gas management system 410 includes a suction pump 462, as shown in FIG. 8. The suction pump 462 applies a negative pressure to the anodic chamber 412 and/or the cathodic chamber 414 to remove gas bubbles adjacent the anode 418, the cathode 422, and/or within the membrane 416. The suction pump 462 is connected to the anodic chamber 412 through the oxygen ring 444 and to the cathodic chamber 414 through the hydrogen ring 448. The negative pressure transports the gas bubbles away from the membrane 416, the anode 418, and/or the cathode 422. In some embodiments, the suction pump 462 may move the gas bubbles toward a gas/liquid separator downstream of the electrochemical cell 411.

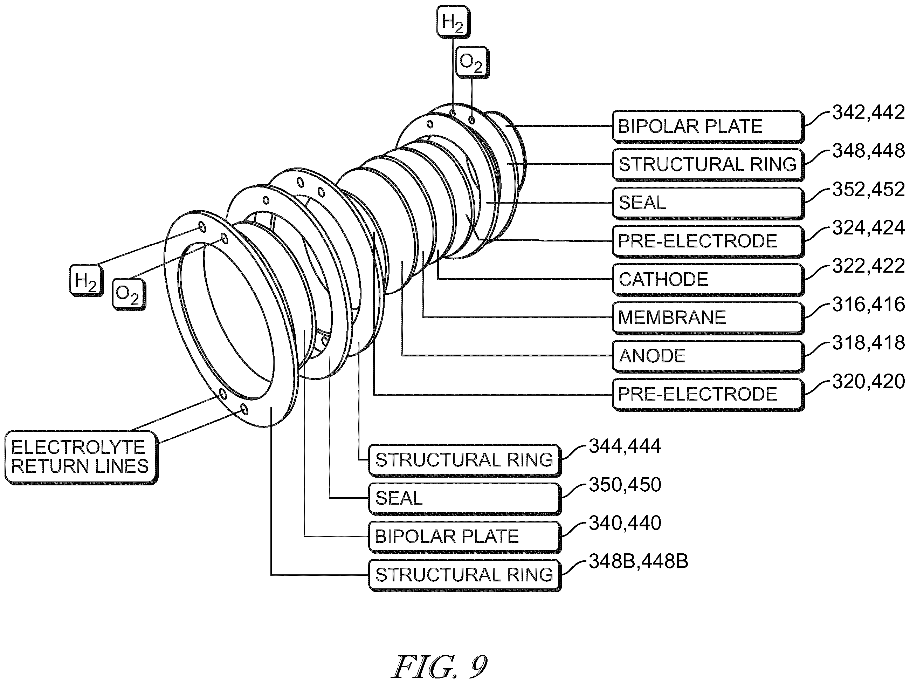

FIG. 9 shows the arrangement of the electrochemical cell 311, 411. The bipolar plate 342, 442 is arranged next to the pre-electrode 324, 424. The pre-electrode 324, 424 is arranged next to the cathode 322, 422. The hydrogen ring 348, 448 extends around the bipolar plate 342, 442, the pre-electrode 324, 424, and the cathode 322, 422. The cathode 322, 422 is arranged next to the membrane 316, 416, which is arranged next to the anode 318, 418. The anode 318, 418 is arranged next to the pre-electrode 320, 420. The pre-electrode 320, 420 is arranged next to the bipolar plate 340, 440. The oxygen ring 344, 444 extends around the anode 318, 418 and the pre-electrode 320, 420. The gasket 352, 452 seals between the rings 348, 448, 344, 444.

The following described aspects of the present invention are contemplated and nonlimiting:
A first aspect of the present invention relates to a gas management system in an electrochemical cell. The gas management system includes an anodic chamber, a cathodic chamber, and a membrane assembly. The anodic chamber is configured to provide a first dry or a first partial dry chamber therein. The cathodic chamber is spaced apart from the anodic chamber in a first direction and is configured to provide a second dry or a second partial dry chamber therein. The membrane assembly is configured to remove gas bubbles from the electrochemical cell to increase hydrogen generation of the electrochemical cell and to reduce gas crossover between the anodic chamber and the cathodic chamber. The membrane assembly includes a first outer layer arranged between the cathodic chamber and the anodic chamber, a second outer layer arranged between the first outer layer and the cathodic chamber, and a spacer layer arranged between the first outer layer and the second outer layer. The first outer layer and the second outer layer cooperate to form a flow chamber therebetween including the spacer layer therein. The spacer layer is porous to allow for flow between the first outer layer and the second outer layer in the first direction. A liquid electrolyte is injected into the flow chamber in a second direction that is perpendicular to the first direction through an inlet of the flow chamber to cause the liquid electrolyte to flow through the flow chamber and through the spacer layer to remove the gas bubbles within the liquid electrolyte and in the membrane assembly from the electrochemical cell.

A second aspect of the present invention relates to a gas management system for an electrochemical cell. The gas management system includes an anodic chamber, a cathodic chamber, a membrane, and a recirculation system. The anodic chamber is configured to provide a first dry or a first partial dry chamber therein. The cathodic chamber is spaced apart from the anodic chamber in a first direction and is configured to provide a second dry or a second partial dry chamber therein. The membrane is arranged between the cathodic chamber and the anodic chamber. The recirculation system includes a recirculation fluid, at least one inlet nozzle configured to inject the recirculation fluid into the electrochemical cell in a second direction perpendicular to the first direction, and at least one outlet nozzle configured to remove the recirculation fluid from the electrochemical cell. Recirculation fluid is injected into the anodic chamber or the cathodic chamber to flow through the anodic chamber or the cathodic chamber and remove gas from the electrochemical cell.

A third aspect of the present invention relates to a gas management system for an electrochemical cell. The gas management system includes an anodic chamber, a cathodic chamber, a membrane, and a suction pump. The anodic chamber is configured to provide a first dry or a first partial dry chamber therein. The cathodic chamber is spaced apart from the anodic chamber in a first direction and is configured to provide a second dry or a second partial dry chamber therein. The membrane is arranged between the cathodic chamber and the anodic chamber. The suction pump is configured to apply a negative pressure to the anodic chamber or the cathodic chamber to transport gas bubbles from the membrane in a second direction perpendicular to the first direction to remove the gas bubbles from the electrochemical cell.

In the first aspect of the present invention, the first outer layer may be a diaphragm separator made of zirconium oxide and polyphenylsulfone, and the second outer layer may be a diaphragm separator made of zirconium oxide and polyphenylsulfone. In the first aspect of the present invention, the spacer layer may be made of polytetrafluoroethylene (PTFE). In the first aspect of the present invention, the spacer layer may be made of polyether ether ketone (PEEK). In the first aspect of the present invention, the spacer layer may be made of polyphenylsulfone (PPSU). In the first aspect of the present invention, the spacer layer may be made of ethylene propylene diene monometer (EPDM). In the first aspect of the present invention, an outlet may be formed in the flow chamber to remove the liquid electrolyte and the gas bubbles therefrom.

In the first aspect of the present invention, the electrochemical cell may be an alkaline fuel cell. In the first aspect of the present invention, the electrochemical cell may be an alkaline electrolyzer cell. In the first aspect of the present invention, the gas management system may further comprise a recirculation system including a recirculation fluid, at least one inlet nozzle configured to inject the recirculation fluid into the electrochemical cell in the second direction, and at least one outlet nozzle configured to remove the recirculation fluid from the electrochemical cell. In the first aspect of the present invention, the at least one inlet nozzle may inject the recirculation fluid into the anodic chamber or the cathodic chamber.

In the first aspect of the present invention, the recirculation fluid may flow through the anodic chamber or the cathodic chamber to remove the gas bubbles from the electrochemical cell. In the first aspect of the present invention, the recirculation fluid may be hydrogen. In the first aspect of the present invention, the recirculation fluid may be oxygen. In the first aspect of the present invention, the recirculation fluid may be water vapor. In the first aspect of the present invention, the recirculation fluid may be nitrogen. In the first aspect of the present invention, the gas management system may further comprise a suction pump configured to apply a negative pressure to the membrane assembly to remove the gas bubbles from the electrochemical cell. In the first aspect of the present invention, the suction pump may be fluidly connected to an outlet of the anodic chamber and an outlet of the cathodic chamber.

In the first aspect of the present invention, the flow chamber may be formed to include the inlet and an outlet opposite the inlet, the anodic chamber may be formed to include an inlet and an outlet opposite the inlet of the anodic chamber, and the cathodic chamber may be formed to include an inlet and an outlet opposite the inlet of the cathodic chamber. In the first aspect of the present invention, the liquid electrolyte may be injected into the inlet of the flow chamber and the liquid electrolyte and the gas bubbles may be removed from the flow chamber through the outlet of the flow chamber.

In the second aspect of the present invention, the recirculation fluid may be hydrogen. In the second aspect of the present invention, the recirculation fluid may be oxygen. In the second aspect of the present invention, the recirculation fluid may be water vapor. In the second aspect of the present invention, the recirculation fluid may be nitrogen.

In the second aspect of the present invention, the membrane may include a first outer layer arranged between the cathodic chamber and the anodic chamber, a second outer layer arranged between the first outer layer and the cathodic chamber, and a spacer layer arranged between the first outer layer and the second outer layer. In the second aspect of the present invention, the first outer layer and the second outer layer may cooperate to form a flow chamber therebetween and the spacer layer may be porous to allow for flow between the first outer layer and the second outer layer. In the second aspect of the present invention, the liquid electrolyte may be injected into the flow chamber in the second direction through an inlet formed in the flow chamber to flow through the flow chamber and through the spacer layer to aid in removal of the gas bubbles from the electrochemical cell.

In the second aspect of the present invention, the first outer layer may be a diaphragm separator made of zirconium oxide and polyphenylsulfone. In the second aspect of the present invention, the second outer layer may be a diaphragm separator made of zirconium oxide and polyphenylsulfone. In the second aspect of the present invention, the spacer layer may be made of polytetrafluoroethylene (PTFE). In the second aspect of the present invention, the spacer layer may be made of polyether ether ketone (PEEK). In the second aspect of the present invention, the spacer layer may be made of polyphenylsulfone (PPSU). In the second aspect of the present invention, the spacer layer may be made of ethylene propylene diene monometer (EPDM). In the second aspect of the present invention, an outlet may be formed in the flow chamber to remove the liquid electrolyte and the gas bubbles therefrom.

In the second aspect of the present invention, the electrochemical cell may be an alkaline fuel cell. In the second aspect of the present invention, the electrochemical cell may be an alkaline electrolyzer cell.

In the third aspect of the present invention, the membrane may include a first outer layer arranged between the cathodic chamber and the anodic chamber, a second outer layer arranged between the first outer layer and the cathodic chamber, and a spacer layer arranged between the first outer layer and the second outer layer. In the third aspect of the present invention, the first outer layer and the second outer layer may cooperate to form a flow chamber therebetween and the spacer layer may be porous to allow for flow between the first outer layer and the second outer layer. In the third aspect of the present invention, the liquid electrolyte may be injected into the flow chamber in the second direction through an inlet formed in the flow chamber to flow through the flow chamber and through the spacer layer to aid in removal of the gas bubbles from the electrochemical cell.

In the third aspect of the present invention, the first outer layer may be a diaphragm separator made of zirconium oxide and polyphenylsulfone. In some embodiments, the second outer layer may be a diaphragm separator made of zirconium oxide and polyphenylsulfone. In the third aspect of the present invention, the spacer layer may be made of polytetrafluoroethylene (PTFE). In the third aspect of the present invention, the spacer layer may be made of polyether ether ketone (PEEK). In the third aspect of the present invention, the spacer layer may be made of polyphenylsulfone (PPSU). In the third aspect of the present invention, the spacer layer may be made of ethylene propylene diene monometer (EPDM). In the third aspect of the present invention, an outlet may be formed in the flow chamber to remove the liquid electrolyte and the gas bubbles therefrom.

In the third aspect of the present invention, the electrochemical cell may be an alkaline fuel cell. In the third aspect of the present invention, the electrochemical cell may be an alkaline electrolyzer cell.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A gas management system in an electrochemical cell comprising:
an anodic chamber configured to provide a first dry or a first partial dry chamber therein,
a cathodic chamber spaced apart from the anodic chamber in a first direction and configured to provide a second dry or a second partial dry chamber therein, and
a membrane assembly configured to remove gas bubbles from the electrochemical cell to increase hydrogen generation of the electrochemical cell and to reduce gas crossover between the anodic chamber and the cathodic chamber, the membrane assembly including a first outer layer arranged between the cathodic chamber and the anodic chamber, a second outer layer arranged between the first outer layer and the cathodic chamber, and a spacer layer arranged between the first outer layer and the second outer layer,
wherein the first outer layer and the second outer layer cooperate to form a flow chamber therebetween including the spacer layer therein, the spacer layer is porous to allow for flow between the first outer layer and the second outer layer in the first direction,
wherein a liquid electrolyte is injected into the flow chamber in a second direction that is perpendicular to the first direction through an inlet of the flow chamber to cause the liquid electrolyte to flow through the flow chamber and through the spacer layer to remove the gas bubbles within the liquid electrolyte and in the membrane assembly from the electrochemical cell.

2. The gas management system of claim 1, wherein the first outer layer is a diaphragm separator made of zirconium oxide and polyphenylsulfone, and wherein the second outer layer is a diaphragm separator made of zirconium oxide and polyphenylsulfone.

3. The gas management system of claim 1, wherein the spacer layer is made of polytetrafluoroethylene (PTFE).

4. The gas management system of claim 1, wherein the spacer layer is made of polyether ether ketone (PEEK).

5. The gas management system of claim 1, wherein the spacer layer is made of polyphenylsulfone (PPSU).

6. The gas management system of claim 1, wherein the spacer layer is made of ethylene propylene diene monometer (EPDM).

7. The gas management system of claim 1, wherein an outlet is formed in the flow chamber to remove the liquid electrolyte and the gas bubbles therefrom.

8. The gas management system of claim 1, further comprising a recirculation system including a recirculation fluid, at least one inlet nozzle configured to inject the recirculation fluid into the electrochemical cell in the second direction, and at least one outlet nozzle configured to remove the recirculation fluid from the electrochemical cell.

9. The gas management system of claim 8, wherein the at least one inlet nozzle injects the recirculation fluid into the anodic chamber or the cathodic chamber.

10. The gas management system of claim 9, wherein the recirculation fluid flows through the anodic chamber or the cathodic chamber to remove the gas bubbles from the electrochemical cell.

11. The gas management system of claim 10, wherein the recirculation fluid is hydrogen, oxygen, water vapor, or nitrogen.

12. The gas management system of claim 1, further comprising a suction pump configured to apply a negative pressure to the anodic chamber and the cathodic chamber to remove the gas bubbles from the electrochemical cell.

13. The gas management system of claim 12, wherein the suction pump is fluidly connected to an outlet of the anodic chamber and an outlet of the cathodic chamber.

14. The gas management system of claim 1, wherein the flow chamber is formed to include the inlet and an outlet opposite the inlet, the anodic chamber is formed to include an inlet and an outlet opposite the inlet of the anodic chamber, and the cathodic chamber is formed to include an inlet and an outlet opposite the inlet of the cathodic chamber.

15. The gas management system of claim 14, wherein the liquid electrolyte is injected into the inlet of the flow chamber and the liquid electrolyte and the gas bubbles are removed from the flow chamber through the outlet of the flow chamber.
